# EUROPEAN PATENT SPECIFICATION

(11) **EP 1 347 887 B1**
(45) Date of publication and mention of the grant of the patent: **12.09.2007**
(21) Application number: 01997409.6
(22) Date of filing: 21.11.2001
(51) Int. Cl.: B60W 20/00

(54) **HYBRID POWER SOURCES DISTRIBUTION MANAGEMENT**
VERWALTUNG VON HYBRIDENERGIEQUELLENVERTEILUNG
GESTION DE LA DISTRIBUTION D'ENERGIE FOURNIE PAR DES SOURCES D'ENERGIE HYBRIDES

(30) Priority: 23.11.2000 GB 0028598
(43) Date of publication of application: 01.10.2003
(73) Proprietor: RICARDO UK LIMITED, Shoreham-by-Sea, West Sussex BN43 5FG (GB)
(72) Inventor: FUSSEY, Peter Michael, Hove, East Sussex BN3 4LP (GB); PORTER, Brian Charles, Ferring, West Sussex BN12 5QJ (GB); WHEALS, Jonathan Charles, Loughborough, Leicestershire LE11 3RA (GB); GOODFELLOW, Craig Lucas, Crowborough, West Sussex TN6 1TL (GB)
(74) Representative: Roberts, Gwilym Vaughan
(86) International application number: PCT/GB2001/005155
(87) International publication number: WO 2002/042110

(56) References cited:
- DE-A- 19 906 601
- US-A- 5 318 142
- US-A- 5 327 992
- US-A- 5 832 396

## Description

The invention relates to a vehicle propulsion system and method in particular for a hybrid electrical vehicle (HEV).

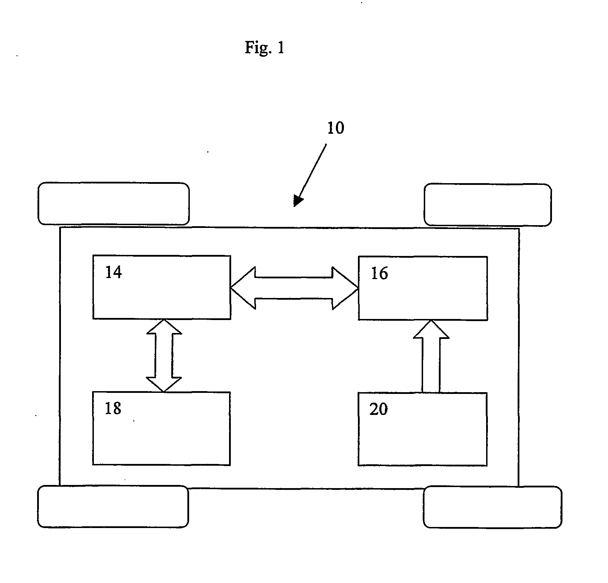

Although hybrid power sources are known the management of energy usage in them is inefficient. For example hybrid electrical vehicles are well known and incorporate two power units and at least one or more stores of fuel or energy; typically the power units comprise an internal combustion engine and an electric machine comprising a motor/generator. In one well known configuration termed a "series" HEV an internal combustion engine is used to generate electricity for storage in a battery and propulsion of the vehicle via a motor/generator. An alternative configuration, the so-called "parallel" HEV is shown schematically in Fig. 1 in a vehicle designated generally 10. The vehicle includes an internal combustion engine 20, an electric motor/generator 14, transmission 16 and a storage device such as a battery 18. The internal combustion engine drives the vehicle 10 through transmission 16. In addition the transmission can also be driven by electric motor 14. Alternatively, when the internal combustion engine is generating excess torque this can be converted to stored electrical energy via transmission 16 and motor/generator 14 operating in generator mode, the electrical energy being stored in battery 18. HEVs of this type are well known and one such is described in US Patent No. 5,984,033 to Tamagawa.

Known control systems for determining the contribution of each energy source to vehicle propulsion and/or when to generate electrical energy (sometimes termed "regenerative" charging where excess vehicle or internal combustion engine energy is converted to electrical energy) are currently very simple. The principal advantages currently attached to HEV's are those of reduced fuel consumption and emissions and, for example, US 4,042,056 to Horwinski discloses an arrangement in which the transition between propulsion modes is determined based on depression of the accelerator by the user and/or the state of charge of the electric battery.

A more sophisticated arrangement is described in WO 00/15455 to Paice Corporation. According to this disclosure a microprocessor monitors driver input and in particular accelerator or throttle engagement and varies the contribution of the energy sources accordingly, taking into account the vehicle's instantaneous torque requirements, engine torque output and the battery charge based on a set of fixed tiles and set points built into, for example, look-up tables. In addition the microprocessor can monitor historical performance and vary subsequent operation accordingly. In parallel to that the system includes intelligent management of an exhaust gas catalytic converter to reduce emissions.

DE 199 06601 A (Toyota) discloses a control system for improving the fuel economy of a hybrid vehicle which selects a running mode according to fuel consumption for a charging operation. US A 5832 369 (Hisada Hideki et al) discloses a hybrid vehicle capable of regenerating a battery and of decreasing exhaust gases for a predefined driving route.

The known systems rely on a rule based strategy that applies a series of rules chosen to keep within the capabilities of the vehicle components or a strategy based on maximising the efficiencies in the system by operating the engine and electric motor/generator at their most efficient points. The know solutions are based around instantaneous minimisation of fuel consumption or maximisation of energy efficiency.

According to the invention there is provided a hybrid power system including first and second energy inputs, first and second respective energy converters, an energy storage device, an energy sink and a power distribution manager wherein the operation of the power system has an associated overall cost which is a function of operational parameters of the power system, and the power distribution manager controls power distribution at an optimum overall cost level.

Thus efficiency is determined on the basis of a range of factors, and a flexible, intelligent control system is achieved.

The energy input may comprise an energy source such as one or more of a chemical (e.g. fuel) or mechanical or electrical energy source such as a rechargeable battery; the energy converter may comprise at least one of an engine such as an internal combustion engine or a fuel cell, the energy storage device which can receive and subsequently return energy to the system may comprise at least one of a battery for example a rechargeable battery, a capacitor, a heat storage device or a flywheel.

Preferably the hybrid power system comprises a vehicle propulsion system. The energy sink may comprise a means by which energy is lost from the system such as at least one of a vehicle driving load, an electrical load, an air conditioning load, an electrical power steering load or a diesel particulate trap regeneration load or other electrical or mechanical loads.

In contrast with known systems in which efficiency is maximised for example by achieving maximum power with minimum fuel consumption, the cost function according to the present invention takes into account the overall operating envelope of the vehicle including driver-induced and environmental factors such as atmospheric emissions loading, topographical influence, the urban environment and so forth. The cost of operating the vehicle to maximise the benefits for an instantaneous or indeed future location of the vehicle may override the demand for instantaneous efficiency. For example the maximum power of the vehicle may be limited or the vehicle may operate under a higher fuel consumption regime to benefit an emissions or DPF regeneration strategy for city use. The vehicle may operate under increased battery power and with a modified exhaust note when passing through environments where vehicle noise must be reduced.

The cost function may be a continuous or substantially continuous function of the parameters.

According to the invention there is further provided a method of managing power distribution in a hybrid power system as claimed in any preceding claim including the steps of assessing an overall cost of a power distribution scheme as a function of operational parameters of the power system and selecting a power distribution scheme at an optimum overall cost level.

According to the invention there is yet further provided a control system for a hybrid power source having first and second power units of different type, at least one of said units being rechargeable by the other unit, the control system controlling operation and recharging of said rechargeable power unit dependent on one or more control values representative of at least one of fuel consumption, exhaust emission, vibration, cabin noise, exterior noise, harshness or load.

The control system preferably controls discharging of said rechargeable energy store when the control value exceeds a benefit limit and the control system preferably controls recharging of said rechargeable energy stores when the control value is less than a cost limit; the benefit limit is preferably a function of the cost limit.

The control value may be compared against a predetermined benefit or cost limit or the control system may receive instantaneous external and/or internal data and the control value may be compared against a benefit or cost limit which is determined based on said external and/or internal data. For example the external data may be geographical data and the internal data may be a battery charge level or ancillary electrical device demand. The cost limit may be based on a predicted future power source load derived from said external or internal data.

In one embodiment said rechargeable unit comprises a battery pack one power unit comprises an electric machine and said other power unit comprises an internal combustion engine.

According to the invention there is further provided a method of controlling a hybrid power source having first and second power units of different type, at least one of said units having a rechargeable energy store rechargeable by said other unit, said method comprising the steps of operating said rechargeable energy store when operation will achieve a net benefit against at least one of fuel consumption ,or exhaust emission, or vibration, or noise, or harshness or load and recharging said rechargeable energy store when recharging is achieved up to the cost limit compared to at least one of fuel consumption or exhaust emission, or vibration, or noise, or harshness, or acceleration, or driveability.

According to the invention there is yet further provided a method of calibrating a control system for a hybrid power source, the control system having a data store and the hybrid power source including first and second power units of different type, at least one of said units being rechargeable by said other unit and in which the power source is powered through a plurality of cycles under varying loads, at least one of the control parameters fuel consumption or exhaust emission, or vibration, or noise, or harshness are recorded and stored in said data store and a rechargeable unit operating benefit and recharging cost is derived for each power source load as a function of the recorded control parameter and stored in said data store. As a result cost/benefit limits can be instantaneously derived in a vehicle.

The invention further provides a computer readable medium storing a program for implementing the system and/or methods as described above, a processor configured to carry out instructions to implement the systems and methods as described above, a hybrid power source comprising first and second power units of different type, at least one of said units being rechargeable by said other unit, and a control system as described above and a vehicle including such a hybrid power source.

Embodiments of the invention will now be described, by way of example, with reference to the drawings of which:
Fig. 2 shows a cost versus power versus time surface according to the present invention;
Fig 3a shows a typical drive cycle;
Fig. 3b shows a cost versus power versus time surface for the drive cycle of Fig. 3 a;
Fig. 3c shows an alternative drive cycle;
Fig. 3d shows a cost versus power versus time surface for the drive cycle of Fig. 3c ;
Fig. 4 is a flow diagram showing a calibration routine; and
Fig. 5 shows a vehicle according to the present invention in communication with an external information source.

The invention will be described with reference to one preferred implementation in relation to HEV' s. The skilled person will be familiar with the energy source/storage and transmission systems of HEV's and of the general interface of these with a control system such that a detailed description of these aspects is not entered into here.

The control system controls a hybrid power source having at least two energy converters comprising an electric machine (motor/generator) and IC engine in the present embodiment and at least one energy store comprising a rechargeable electric battery. These can be viewed as two power units. One input to the control system for an HEV effectively comprises driver demand for an aspect of vehicle performance such as, in particular, acceleration or braking. However demands may also be received from other units which can be viewed as additional energy sinks, for example an air-conditioning unit, a diesel particulate filter or additional ancillary units. Typically a further control parameter is that the vehicle remains capable of charging up electrical energy for the electric machine without recourse to an external recharger, and that the state of charge of the energy store should remain within certain limits. Yet a further parameter might be an instantaneous factor such as non-predicted driver stop. The present invention recognises, however, that within these constraints an intelligent control system can be implemented determining the optimum time and amount of generation of electricity and the optimum instant and amount of energy supplied to the drive and distributed to other components by the electric motor.

In particular the control system of the present invention takes into consideration a range of operational conditions including for example, fuel consumption and/or efficiency of the various HEV power units, rate of exhaust emissions produced, noise, vibration, and harshness (NVH) metrics, drivability or rate of acceleration to provide an overall parameter termed the "objective function". The objective function, which can also be viewed as an overall system cost or "specific cost", can then be minimised over time to optimise the cost of generating electricity and/or the benefit from motoring by controlling the timing, duration and rate of generating/motoring. The objective function can be selected, either for legislative requirements or customer requirements as can be seen from the parameters taken into account.

The key goals are that the electricity should be generated at the cheapest time with reference to the objective function and that electricity should be used for motoring only when the benefit is greater than the cost incurred in generating electricity to replace the electricity used. Accordingly the overall system cost for any mode of operation is assessed whether and when that mode should be implemented or evaluated based on the overall system cost.

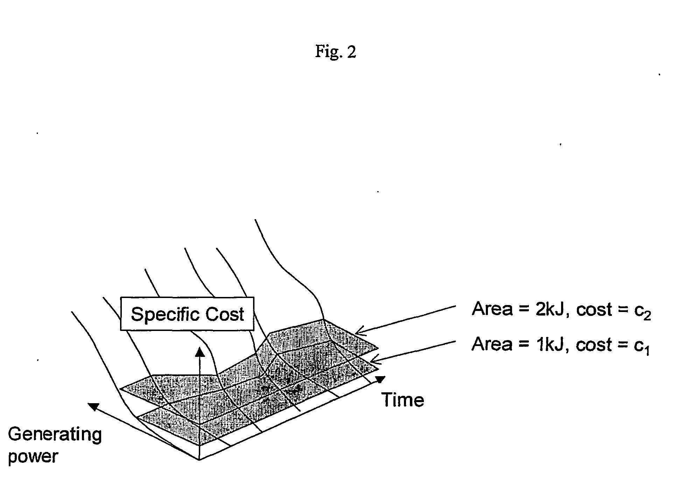

The first goal is implemented by always generating up to a given specific cost. This is illustrated in Fig. 2 where the specific cost(z axis) is plotted against generating power and time to give a 3D surface. A lowest cost option is determined dependent upon the amount of energy that requires to be generated. The total amount of energy is obtained by integrating the power against time curve for a given cost (i.e. z = constant). This can be achieved by incrementing the value of the cost (z) axis from 0 until the total integrated in the x-y, power-time plane equals the required energy amount. The lowest cost value is then the corresponding z value. The curve derived at the intersection of the z plane with the 3-D surface represents the optimum variation of generated power against time. Fig. 2 can be viewed intuitively as representing a volume with the x-y plane horizontal and the z plane vertical and a water level rising from z = 0, on top of the 3-D surface. When the surface area of the water is equivalent to the desired energy value then the related cost is determined and the optimum power generation versus time curve is formed at the boundary of the water and the 3-D surface. In the example shown in Fig. 2 a first smaller surface area representing 1 kJ of energy is achieved at a cost z = c₁ and a higher value of generated energy of 2 kJ is achieved at a cost z = c₂.

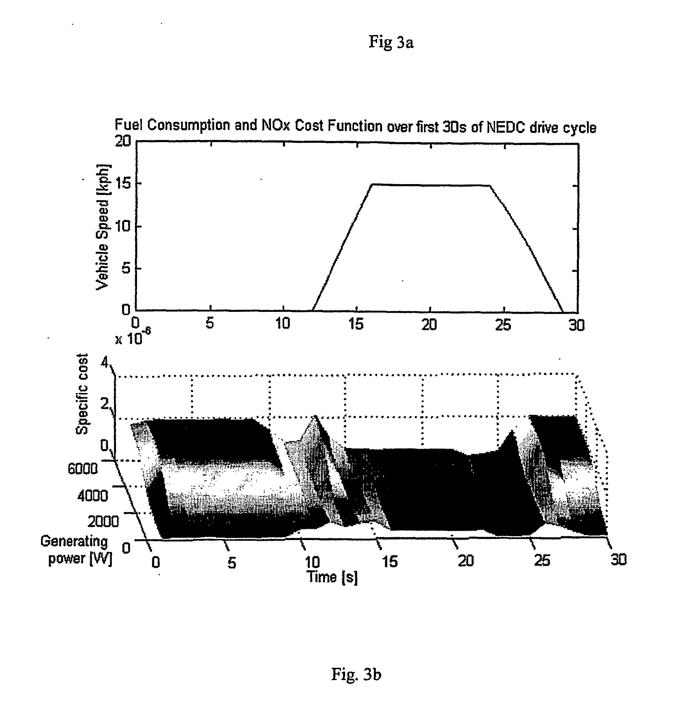

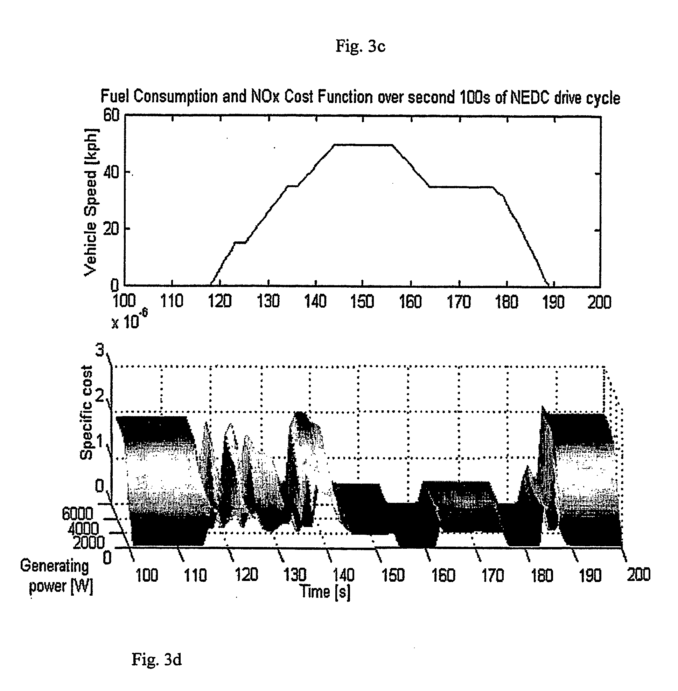

With reference to Figs. 3a to 3d, operation of the invention in the generating mode can be understood. Fig. 3 a represents part of an exemplary drive cycle as determined for the Economic Council for Europe emission test cycle of a vehicle in which it is at rest for approximately 12 seconds, accelerates at a constant rate to attain at about 16 seconds a constant speed of 15km per hour and then decelerates at approximately 24 seconds at a constant rate to stationary at approximately 29 seconds, in a 30 second cycle.

The control system effectively calculates and consults a series of 2-D curves of specific cost v generating power as the drive cycle progresses to assess the optimum scheme for electrical generation in terms of the "specific cost" of the operation. Preferably the relevant data for generating these curves is derived from calibration results obtained from running the engine type on a test bed and monitoring, for example, emission and fuel consumption for the calibration range of engine loads and speeds. A history of these 2-D curves can be represented as a 3-D surface as shown in Fig 3b represents a 3-dimensional surface obtained from a plot on 3 axes, the x axis representing the 30 second time interval, the y axis representing electrical generation rate measured in Watts and the z axis the "specific cost" representative of the objective function, all for the drive cycle illustrated.

As can be seen in Fig. 3b a low level of energy generation of the order of a few tens of Watts can be obtained at low cost in the period when the vehicle is stationary and when the vehicle has settled at its cruising speed. In addition low cost generation can be achieved whilst the vehicle is braking, as some of the kinetic energy of the vehicle can be used to generate electricity directly, so called "regenerative braking". On the other hand, for a fixed point in the drive cycle, for example whilst the vehicle is stationary, the cost of generating electrical energy increases as the generation rate increases. As a rule, costs are particularly high whilst the vehicle is accelerating as electrical generation is simply a further power burden but on the other hand electrical energy generation even at high generation rates can be achieved at low cost during regenerative braking. As a result, when the vehicle is under a specific engine load and speed, the cost of generating can be derived from calibrated values and, as discussed in more detail below, compared to a cost limit to assess whether generation should take place. As discussed in more detail below, this approach is particularly useful in optimising energy management when an upcoming drive cycle can be predicted, for example from real-time external data. Fig. 3d shows the corresponding 3D curve constructed for the drive cycle shown in Fig. 3c.

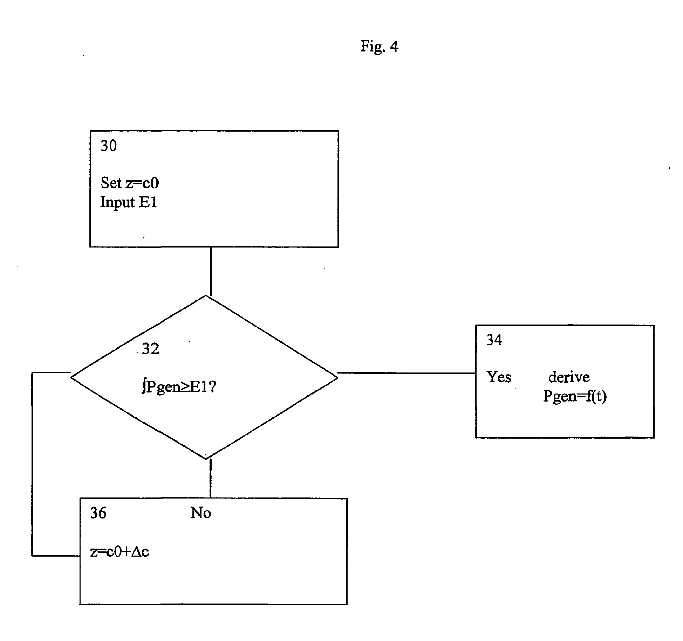

As an example of how to calibrate i.e. adjust the parameters within a control strategy for a typical driving style, the flow chart in Fig. 4 is used. At step 30 the cost value is set at a lower level z = c₀ and a desired generated energy value E₁ is input. At step 32 the generated power curve P_{gen} is integrated over time. If the integrated value is greater than or equal to the energy input value E₁ then the cost value is the value of z used in step 34. If, however, the desired stored value is not reached then the value is z is incremented by a small value Δc and the process is repeated until the desired value of generated energy is obtained.

In the embodiment discussed above, the "specific cost" value is represented as an absolute figure. In the preferred embodiment the cost represents an objective function combining a measure of a range of parameters into a single value with a combination of, for example, fuel consumption (the higher the fuel consumption the higher the cost) and exhaust emissions (again, the higher the emissions the higher the cost). Of course these variables are preferably normalised and can be combined in any appropriate manner either arithmetically or by a more complex function in order to arrive at a value representative of cost. As a result the vehicle, for a given state (for example accelerating at a given rate and at a given instantaneous velocity) will be operating at a given cost level in terms of the fuel consumption and emission that arise from generating the required power.

The remaining control criteria is when to assist or replace the internal combustion engine with the electric motor, and at what power. As a basic example, if the electric motor is used to assist the internal combustion engine during an acceleration then this will reduce fuel consumption and some of the emission species. Accordingly the strategy for electric motor assist is that it should be used when the benefit (reduction in fuel consumption and emissions) to be gained from motor assist exceeds the cost (increase in fuel consumption and emissions) of generating the electricity. This is implemented by having a second limit, the benefit limit, which can be a function of the cost limit. The electric motor is used to assist or replace the internal combustion engine when the benefit exceeds the benefit limit.

In use therefore, the control system will estimate instantaneously the cost and benefit from generating and motoring respectively. These will be compared to the cost and benefit limits to determine the generating or motoring power.

These limits can either be set for a typical driving style or left as an adaptive limit which can alter if, for example, the battery State Of Charge starts to fall such that the need for generating become more urgent.

In an alternative embodiment, the system sets cost and benefit levels instantaneously dependent on external influences or to adapt to changes in driving style or vehicle usage history. Examples of the external influences are: infrequent use of a high power ancillary such as an air conditioning unit or, in a diesel engine, a particulate trap generation system, or geographic inputs as discussed below.

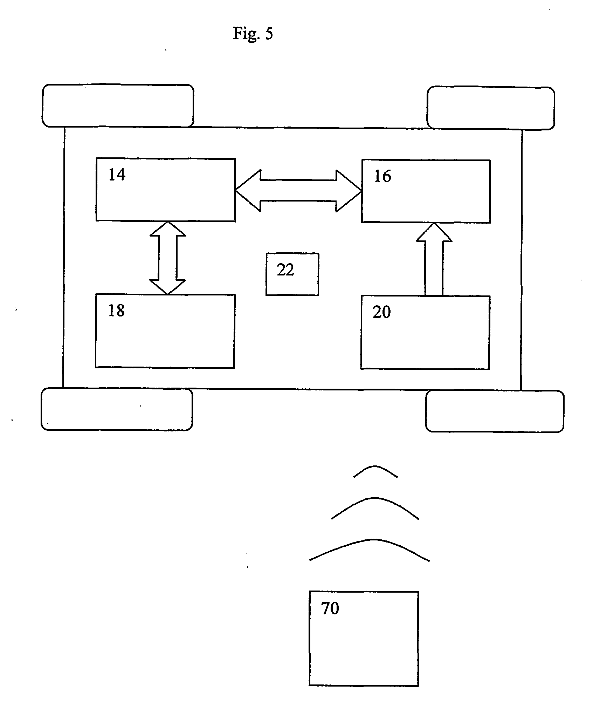

The geographic inputs can be implemented as shown in Fig. 5. The vehicle includes a control system 22 which controls the power and transmission system and includes a power distribution manager for the power distribution in the vehicle. In addition the controller 22 receives or derives further data concerning the external environment by communication with an external transmitter 70. The external transmitter 70 can be a GPS satellite, a radio or wireless access protocol transmitter or any other suitable form of transmitter. The information derived by the control system 22 may therefore be the instantaneous geographical location of the vehicle or a forecast of impending driving conditions, environment emissions monitoring, street position and time. For example the control system may derive its instantaneous geographical location from the GPS and on that basis establish that it is in an urban or built up area as a result of which emissions should be reduced. On that basis the cost and benefit level for operation of the electric motor should be varied such that the electric motor is used more and the stored energy (e.g. the battery state of charge) is lowered for a period. Alternatively the control system may derive the driving conditions for the next, say, ten miles and on that basis perform a predictive analysis of the burden on the vehicle in that time. As a result it can, for example, modify the cost and or benefit levels to take advantage of future conditions. The cost limit may be raised, however, if the battery charge is sufficiently low such that generation takes place earlier even though a period of operation at lower cost is available in the future. Alternatively the knowledge of the future route may enable the vehicle to operate at maximum power and battery charging capability but at increased emissions over, for example, a rural stretch of road to enable one hundred per cent battery operation at limited emissions in an urban environment.

Accordingly it will be seen that the system represented schematically in Fig. 5 can be combined with the stored data and benefit/cost assessment system described with reference to Figs. 2 to 4 to arrive at an arrangement which provides optimum motoring/generation in an HEV.

The system may further take into account the driving style of the driver. This may be achieved either by presenting the driver with appropriate predetermined options for example "normal ", "sports ", " economy" and continuum. In each case the derivation of the system costs/benefit is performed according to an appropriate predetermined function. Alternatively the driver style can be learnt as an extension of the intelligent system provided by the invention. For example the costs and benefit limits for a driver who drives very slowly will differ from one who drives aggressively, for example reaching a high rev count in each gear. The system can detect behavioural patterns like this and factor them in when assessing costs/benefit projections. The system can store different driving styles for different users who can identify themselves in an appropriate known manner, for example by having separately programmed ignition keys.

An example of how the operation of a known high power ancillary which is occasionally used can be taken into account is now discussed with reference to electrically, powered air conditioning. Consider a vehicle starting a journey in hot weather. The driver switches on the air conditioning which increases the electrical load on the vehicle. The controller increases the cost limit for generating electricity by an amount which over a typical driving pattern will generate sufficient electrical energy to allow the air conditioning to operate. The increase in cost limit can be calibrated as a function of additional power demand.

The DPF (diesel particulate filter) is a device which requires cleaning periodically, this can be achieved using a high power electric heater. The cost from cleaning with the electrical heater is compared against the cost due to increased load on the engine due to back pressure caused by a loaded DPF. The objective function can be used to select an optimum time to clean the DPF. Once it has been decided to clean the DPF the additional generating power can be added to the power calculation by the cost and benefit limits. This is a specific approach for short duration high power electrical loads.

As a further example, in current powertrain and aftertreatment models, catalytic control increases CO₂ emissions by ten to fifteen per cent, and emission standards are designed to safeguard city air quality. However unacceptable emissions levels may vary for city and countryside driving typically by 5% to 15% and a location-specific acceptable emissions level can be viewed as an environmental cost forming a further parameter of the objective function. Referring to the system described with reference to Fig. 5, the vehicle control system 22 can receive an emission priority level setting associated environmental cost from a remote station 70 and an emission species weighting transmitted to the vehicle. This can be dependent, for example, on whether the vehicle is involved in country driving, urban driving or motorway driving and the vehicle location can be determined either using GPS (global positioning satellite) or can be simply dependent on the signal broadcast from the remote station which will be appropriate for the locality. As a result the control system 22 can control tailpipe emissions accordingly. As a result, for example, electric motor drive may be implemented more frequently in urban than in country driving.

A further aspect that can be factored into the objective function is a subjective noise, vibration, harshness (NVH) rating for example as a function of engine load and engine speed as a result this will be a further parameter taken into account when the control system assesses which drive mode to adopt.

Yet a further factor that can be controlled by the control system is hybrid engine start/stop. In particular if the duration of the stop can be predicted, the cost of starting can be assessed. If this is less than the benefit of stopping (again comparing the overall costs of each option) the engine can be stopped. The predicted duration can be dependent on, for example, an indication of the vehicle's position in a traffic queue available from a remote station. If the vehicle is near the front of the queue then the cost saving on fuel and emissions, say, achieved by stopping the engine may be outweighed by the enhanced fuel consumption and emissions level if the engine is restarted shortly after it has stopped. A further consideration might be the DPF requirements. For example in heavy traffic the GPS may be aware of traffic information and the vehicle on-board system aware that the DPF is about to require regeneration. Here, where the temperature of the exhaust is low due to the engine loading at low speed or idle in, for example, heavy slow moving traffic, the cabin temperature may also be low. The system may therefore make the decision to apply a stop start regime in traffic as the cost of shutting down and restarting to charge the battery to bring in the DPF heater is too great.

It will be seen, therefore, that the invention provides a system and method where basic components of a vehicle are managed with the objective of minimising the overall cost to undertake a journey. The overall cost is an objective function which can include costs to the driver, (NVH, fuel consumption) and costs to the environment (emissions, NVH). The invention can relate to hybrid vehicles containing at least two power units and at least one rechargeable energy store, but can extend to other power systems as well. The invention can be realised in a controller which instantaneously manages the energy flows in the power units between the energy store or stores and the energy converters according to a comparison of objective function cost with cost and benefit limits. The cost and benefit limits may vary taking into account driver style, the instantaneous demands of high power ancillaries, or the battery or other energy store charge level.

It will be appreciated that the hybrid vehicle can be any type of vehicle including an automobile, bus, truck and so forth. The control system can be implemented in any appropriate manner for example in software or in hardware, for example in the form of a plug-in board attached to the vehicle electronics and existing HEV control. The propulsion units are discussed here as an internal combustion engine and electric motor respectively but it will be appreciated that any appropriate propulsion unit can be introduced and that more than one of each propulsion unit can equally be introduced. Similarly the energy storage unit need not be battery but can be, for example, a mechanical energy storage unit such as a flywheel. It will be further appreciated that the embodiments or aspects of them described above can be combined and interchanged as appropriate.

## Claims

1. A hybrid power system including first and second energy inputs, first (20) and second (14) respective energy converters, an energy storage device (18), an energy sink and a power distribution manager wherein the operation of the power system has an associated overall cost which is a function of operational parameters of the power system, and the power distribution manager controls power distribution using an optimum overall cost level; **characterised in that** said optimum overall cost level is obtained by comparing the cost associated with recharging said energy storage device (18) to a cost limit and comparing the benefit, which is a function of operational parameters of the power system, associated with operating said second energy converter (14) to a benefit limit, wherein said cost limit and benefit limit are predetermined, or derived instantaneously.

2. A system as claimed in claim 1 in which the parameters include one or more of energy input consumption, energy sink emission, storage level in the energy storage device, vibration, noise, harshness, power distribution cost and load on the power system, or in which the energy input comprises one or more of a chemical, mechanical or electrical energy source such as a rechargeable battery, hydraulic, pneumatic or nuclear, or in which the energy converter (20) comprises at least one of an engine or a fuel cell, or in which the energy storage device (18) comprises at least one of a battery, for example a rechargeable battery, a capacitor, a heat storage device or a flywheel.

3. A system as claimed in any preceding claim comprising a vehicle propulsion system, and preferably in which the energy sink comprises at least one of a vehicle (10) driving load, an electrical load, an air conditioning load, an electrical power steering load or a diesel particulate trap regeneration load.

4. A system as claimed in any preceding claim in which the energy storage device (18) is rechargeable by one of said energy converters (14, 20) and preferably in which the operational parameters include the cost of recharging the energy storage device (18).

5. A system as claimed in any preceding claim in which the operational parameters further include at least one of environmental factors, or in which the overall cost is further a function of predicted or derived future operational parameters, or in which the overall cost is a function of a plurality of operational parameters.

6. A system as claimed in claim 1 in which the benefit limit is a function of the cost limit.

7. A control system (22) for a hybrid power system as claimed in claim 1 wherein said energy storage device (18) is rechargeable by at least one of said first and second energy converters (20, 14), the control system (22) controlling operation and recharging of said energy storage device (18) according to the cost limit and the benefit limit, dependent on one or more control values representative of at least one of fuel consumption, exhaust emission, vibration, noise, harshness, load mechanical durability, system durability or battery durability.

8. A control system (22) as claimed in claim 7 in which the control value is derived based on an instantaneous power source condition, or in which the control system (22) controls operation of second energy converter (14) when the control value exceeds said benefit limit, or in which the control system (22) controls recharging of said energy storage device (18) when the control value is less than said cost limit, or in which the benefit limit is a function of the cost limit.

9. A control system (22) as claimed in claim 7 or claim 8 in which the control value is compared against a predetermined or adaptive benefit or cost limit.

10. A control system (22) as claimed in claim 7 or claim 8 in which the control system (22) receives instantaneous external and/or internal data and the control value is compared against a benefit or cost limit determined based on said external and/or internal data, and preferably in which the cost limit is based on a predicted future power source load derived from said external and/or internal data.

11. A control system (22) as claimed in any of claims 7 to 10 in which said energy storage device (18) comprises at least one of a battery, a capacitor, a heat storage device and a fly wheel.

12. A method of managing power distribution in a hybrid power system including first and second energy inputs, first (20) and second (14) respective energy converters, an energy storage device (18), an energy sink and a power distribution manager wherein the operation of the power system has an associated overall cost which is a function of operational parameters of the power system, the method including the steps of assessing an overall cost and benefit associated with a power distribution scheme as a function of operational parameters of the power system and selecting a power distribution scheme using an optimum overall cost level by comparison of said overall cost and benefit to a cost limit and a benefit limit respectively;
**characterised in that** said optimum overall cost level is obtained by comparing the cost associated with recharging said energy storage device (18) to a cost limit and comparing the benefit, which is a function of operational parameters of the power system, associated with operating said second energy converter (14) to a benefit limit, wherein said cost limit and benefit limit are predetermined, or derived instantaneously.

13. A method as claimed in claim 12, said method comprising the steps of operating said second energy converter (14) when operation will achieve a benefit which is equal to or greater than a benefit limit compared to at least one of fuel consumption, exhaust emission, vibration, noise, harshness or load by said hybrid power source and recharging said energy storage device (18) when recharging is achieved up to the cost limit compared to at least one of fuel consumption, exhaust emission, vibration, noise, harshness or load.

14. A method as claimed in claim 13 comprising the step of deriving a benefit level associated with operating the second energy converter (14) and comparing the benefit level with a benefit limit to assess whether a net benefit will be achieved, or comprising the steps of deriving a cost level for recharging said energy storage device (18) and comparing said cost level with a cost limit to assess whether the recharging cost is acceptable, or in which the benefit limit and/or the cost limit are predetermined, or in which the cost limit and/or benefit limit are derived instantaneously.

15. A method an claimed in claim 12 in which the benefit limit is a function of the cost limit.

16. A computer readable medium storing a program for implementing power distribution management in a hybrid power system as claimed in any of claims 1 to 6, control system (22) as claimed in any of claims 7 to 11 or a method as claimed in any of claims 12 to 15.

17. A processor configured to carry out instructions to implement a power distribution management for a hybrid power system as claimed in any of claims 1 to 6, control system (22) as claimed in any of claims 7 to 11 or a method as claimed in any of claims 12 to 15.

18. A hybrid power source comprising first (20) and second power units (14) of different type, at least one (14) of said units being rechargeable by said other unit, (20) and a control system (22) as claimed in any of claims 7 to 11.

19. A vehicle (10) including a hybrid power source as claimed in claim 18.

## Patentansprüche

1. Hybrid-Antriebskraftsystem mit einem ersten und einem zweiten Energie-Eingang, jeweils einem ersten (20) und einem zweiten (14) Energiewandler, einer Energie-Speichereinrichtung (18), einem Energieverbraucher und einer Antriebskraftverteilungs-Verwaltungseinrichtung, wobei der Betrieb des Antriebskraftsystems zugehörige Gesamtkosten hat, die eine Funktion von Betriebsparametern des Antriebskraftsystems sind, und die Antriebskraftverteilungs-Verwaltungseinrichtung die Antriebskraftverteilung unter Verwendung einer optimalen Gesamtkostenhöhe steuert; **dadurch gekennzeichnet, dass** die optimale Gesamtkostenhöhe durch Vergleichen der mit dem Wiederaufladen der Energiespeichervorrichtung (18) verbundenen Kosten mit einem Kosten-Limit, und Vergleichen des eine Funktion der Betriebsparameter des Antriebskraftsystems darstellenden Nutzens, welcher mit dem Betreiben des zweiten Energiewandlers (14) verbunden ist, mit einem Nutzen-Limit erhalten wird, wobei das Kosten-Limit und das Nutzen-Limit vorbestimmt sind oder augenblicklich erhalten werden.

2. System nach Anspruch 1, wobei die Parameter eines oder mehreres von Energieeingangsverbrauch, Energieverbraucher-Emission, Speichermenge in der Energiespeichervorrichtung, Vibration, Lärm, Härte, Antriebskraftverteilungskosten und Belastung des Antriebskraftsystems sind, oder wobei der Energieeingang eines oder mehrere von einer chemischen, mechanischen oder elektrischen Energiequelle umfasst, wie eine wiederaufladbare hydraulische, pneumatische oder Nuklear-Batterie, oder wobei der Energiewandler (20) mindestens eines von einem Motor oder einer Kraftstoffzelle umfasst, oder wobei die Energiespeichervorrichtung (18) mindestens eines von einer Batterie, beispielsweise einer wiederaufladbaren Batterie, einem Kondensator, einer Wärmespeichervorrichtung oder einem Schwungrad umfasst.

3. System nach einem vorhergehenden Anspruch, welches ein Fahrzeugantriebssystem umfasst, und wobei vorzugsweise der Energieverbraucher mindestens eines von einer Fahrzeug(10)-Antriebslast, einer elektrischen Belastung, einer Klimaanlagen-Belastung, einer elektrischen Servolenkungs-Belastung oder einer Diesel-Partikelabscheider-Regenerierungs-Belastung ist.

4. System nach einem vorhergehenden Anspruch, wobei die Energiespeichervorrichtung (18) mit einem der Energiewandler (14, 20) wieder aufladbar ist und wobei vorzugsweise die Betriebsparameter die Kosten der Wiederaufladung der Energiespeichervorrichtung (18) inkludieren.

5. System nach einem vorhergehenden Anspruch, wobei die Betriebsparameter weiters mindestens einen Umweltfaktor inkludieren, oder wobei die Gesamtkosten weiters eine Funktion vorhergesagter oder abgeleiteter zukünftiger Betriebsparameter sind, oder wobei die Gesamtkosten eine Funktion einer Mehrzahl von Betriebsparametern sind.

6. System nach Anspruch 1, wobei das Nutzen-Limit eine Funktion des Kosten-Limits ist.

7. Steuersystem (22) für ein Hybrid-Antriebskraftsystem nach Anspruch 1, wobei die Energiespeichervorrichtung (18) mit mindestens einem des ersten und des zweiten Energiewandlers (20, 14) wiederaufladbar ist, und wobei das Steuersystem (22) den Betrieb und die Wiederaufladung der Energeispeichervorrichtung (18) gemäß dem Kosten-Limit und dem Nutzen-Limit in Abhängigkeit von einem oder mehreren Steuerwerten steuert, die repräsentativ sind für mindestens eines von Kraftstoffverbrauch, Abgasemission, Vibration, Lärm, Härte, mechanische Belastbarkeit, SystemLebensdauer oder Batterie-Lebensdauer.

8. Steuersystem (22) nach Anspruch 7, wobei der Steuerwert aufgrund eines augenblicklichen Energiequellen-Zustands abgeleitet wird, oder wobei das Steuersystem (22) den Betrieb des zweiten Energiewandlers (14) steuert, wenn der Steuerwert das Nutzen-Limit übersteigt, oder wobei das Steuersystem (22) das Wiederaufladen der Energiespeichervorrichtung (18) steuert, wenn der Steuerwert geringer als das Kosten-Limit ist, oder wobei das Nutzen-Limit eine Funktion des Kosten-Limits ist.

9. Steuersystem (22) nach Anspruch 7 oder 8, wobei der Steuerwert mit einem vorbestimmten oder adaptiven Nutzen- oder Kosten-Limit verglichen wird.

10. Steuersystem (22) nach Anspruch 7 oder 8, wobei das Steuersystem (22) augenblicklich externe und/oder interne Daten erhält und der Steuerwert mit einem Nutzen- oder Kosten-Limit verglichen wird, das aufgrund der externen und/oder internen Daten bestimmt wird, und wobei vorzugsweise das Kosten-Limit auf einer vorhergesagten zukünftigen Antriebskraftquellen-Belastung basiert, die von den externen und/oder internen Daten abgeleitet ist.

11. Steuersystem (22) nach einem der Ansprüche 7 bis 10, wobei die Energiespeichervorrichtung (18) mindestens eines von einer Batterie, einem Kondensator, einer Wärmespeichervorrichtung und einem Schwungrad umfasst.

12. Verfahren zur Verwaltung der Antriebskraftverteilung in einem Hybrid-Antriebskraftsystem mit einem ersten und einem zweiten Energie-Eingang, jeweils einem ersten (20) und einem zweiten (14) Energiewandler, einer Energiespeichervorrichtung (18), einem Energieverbraucher und einer Antriebskraftverteilungs-Verwaltungseinrichtung, wobei der Betrieb des Antriebskraftsystems zugehörige Gesamtkosten hat, die eine Funktion von Betriebsparametern des Antriebskraftsystems sind, welches Verfahren die Schritte des Feststellens der Gesamtkosten und des Gesamtnutzens, die mit einem Antriebskraftverteilungsschema verbunden sind, als Funktion von Betriebsparametern des Antriebskraftsystems und des Auswählens eines Antriebskraftverteilungsschemas unter Verwendung einer optimalen Gesamtkostenhöhe durch Vergleichen der Gesamtkosten und des Gesamtnutzens mit einem Kosten-Limit bzw. einem Nutzen-Limit umfasst;
**dadurch gekennzeichnet, dass** die optimale Gesamtkostenhöhe durch Vergleichen der mit dem Wiederaufladen der Energiespeichervorrichtung (18) verbundenen Kosten mit einem Kosten-Limit und Vergleichen des eine Funktion der Betriebsparameter des Antriebskraftsystems darstellenden Nutzens, welcher mit dem Betreiben des zweiten Energiewandlers (14) verbunden ist, mit einem Nutzen-Limit erhalten wird, wobei das Kosten-Limit und das Nutzen-Limit vorbestimmt sind oder augenblicklich erhalten werden.

13. Verfahren nach Anspruch 12, welches Verfahren die Schritte des Betreibens des zweiten Energiewandlers (14) umfasst, wenn ein Betrieb einen Nutzen erreicht, der gleich oder größer ist als ein Nutzen-Limit im Vergleich mit mindestens einem von Kraftstoffverbrauch, Abgasemission, Vibration, Lärm, Härte oder Belastung durch die Hybrid-Antriebskraftquelle, und des Wiederaufladens der Energiespeichervorrichtung (18), wenn ein Wiederaufladen bis zum Kosten-Limit erreicht wird im Vergleich zu mindestens einem von Kraftstoffverbrauch, Abgasemission, Vibration, Lärm, Härte oder Belastung.

14. Verfahren nach Anspruch 13, umfassend die Schritte des Ableitens einer mit dem Betreiben des zweiten Energiewandlers (14) verbunden Nutzen-Höhe und des Vergleichens der Nutzen-Höhe mit einem Nutzen-Limit, um festzustellen, ob ein Netto-Nutzen erreicht wird, oder umfassend die Schritte des Ableitens einer Kostenhöhe für das Wiederaufladen der Energiespeichervorrichtung (18) und des Vergleichens der Kostenhöhe mit einem Kosten-Limit, um festzustellen, ob die Wiederaufladungskosten akzeptabel sind, oder wobei das Nutzen-Limit und/oder das Kosten-Limit vorbestimmt sind, oder wobei das Kosten-Limit und/oder das Nutzen-Limit augenblicklich abgeleitet werden.

15. Verfahren nach Anspruch 12, wobei das Nutzen-Limit eine Funktion des Kosten-Limits ist.

16. Computer-lesbares Medium, welches ein Programm zur Implementierung der Antriebskraftverteilungs-Verwaltung speichert, in einem Hybrid-Antriebskraftsystem nach einem der Ansprüche 1 bis 6, Steuersystem (22) nach einem der Ansprüche 7 bis 11, oder Verfahren nach einem der Ansprüche 12 bis 15.

17. Prozessor, der zur Durchführung von Instruktionen konfiguriert ist, um eine Antriebskraftverteilungs-Verwaltung für ein Hybrid-Antriebskraftsystem nach einem der Ansprüche 1 bis 6, ein Steuersystem (22) nach einem der Ansprüche 7 bis 11 oder ein Verfahren nach einem der Ansprüche 12 bis 15 zu implementieren.

18. Hybrid-Antriebskraftquelle mit einer ersten (20) und einer zweiten Antriebskrafteinheit (14) verschiedenen Typs, wobei mindestens eine (14) der Einheiten durch die andere Einheit (20) wiederaufladbar ist, und Steuersystem (22) nach einem der Ansprüche 7 bis 11.

19. Fahrzeug (10), einschließlich einer Hybrid-Antriebskraftquelle nach Anspruch 18.

## Revendications

1. Système d'alimentation hybride incluant une première et une deuxième entrées d'énergie, un premier (20) et un deuxième (14) convertisseurs d'énergie respectifs, un dispositif d'accumulation d'énergie (18), un puits d'énergie et un dispositif de gestion de la distribution d'énergie dans lequel le fonctionnement du système d'alimentation présente un coût total associé qui est fonction de paramètres opérationnels du système d'alimentation, et le dispositif de gestion de la distribution d'énergie régule la distribution d'énergie en utilisant un niveau de coût total optimal ; **caractérisé en ce que** ledit niveau de coût total optimal est obtenu en comparant le coût associé à la recharge dudit dispositif d'accumulation d'énergie (18) à une limite de coût et en comparant l'avantage, qui est fonction de paramètres opérationnels du système d'alimentation, associé au fonctionnement dudit deuxième convertisseur d'énergie (14) à une limite d'avantage, dans lequel ladite limite de coût et ladite limite d'avantage sont prédéterminées, ou dérivées instantanément.

2. Système suivant la revendication 1 dans lequel les paramètres incluent un ou plusieurs paramètres parmi la consommation de l'entrée d'énergie, l'émission du puits d'énergie, le niveau d'accumulation dans le dispositif d'accumulation d'énergie, les vibrations, le bruit, la rugosité, le coût de distribution d'énergie et la charge sur le système d'alimentation, ou dans lequel l'entrée d'énergie comprend un ou plusieurs éléments parmi une source d'énergie chimique, mécanique ou électrique telle qu'une batterie rechargeable, hydraulique, pneumatique ou nucléaire, ou dans lequel le convertisseur d'énergie (20) comprend au moins un moteur et/ou une pile à combustible, ou dans lequel le dispositif d'accumulation d'énergie (18) comprend au moins une batterie, par exemple une batterie rechargeable, un condensateur, un dispositif d'accumulation de chaleur et/ou un volant.

3. Système suivant l'une quelconque des revendications précédentes comprenant un système de propulsion de véhicule, et de préférence dans lequel le puits d'énergie comprend au moins une charge d'entraînement de véhicule (10), une charge électrique, une charge de conditionnement d'air, une charge de direction assistée électrique ou une charge de régénération de piège à particules diesel.

4. Système suivant l'une quelconque des revendications précédentes dans lequel le dispositif d'accumulation d'énergie (18) est rechargeable par l'un desdits convertisseurs d'énergie (14, 20) et de préférence dans lequel les paramètres opérationnels incluent le coût de la recharge du dispositif d'accumulation d'énergie (18).

5. Système suivant l'une quelconque des revendications précédentes dans lequel les paramètres opérationnels incluent en outre au moins un facteur parmi des facteurs environnementaux, ou dans lequel le coût total est en outre fonction de paramètres opérationnels futurs prédits ou dérivés, ou dans lequel le coût total est fonction d'une pluralité de paramètres opérationnels.

6. Système suivant la revendication 1 dans lequel la limite d'avantage est fonction de la limite de coût.

7. Système de commande (22) prévu pour un système d'alimentation hybride suivant la revendication 1 dans lequel ledit dispositif d'accumulation d'énergie (18) est rechargeable par au moins un desdits premier et deuxième convertisseurs d'énergie (20, 14), le système de commande (22) régulant le fonctionnement et la recharge dudit dispositif d'accumulation d'énergie (18) selon la limite de coût et la limite d'avantage, en fonction d'une ou de plusieurs valeurs de commande représentatives d'au moins la consommation de carburant, l'émission d'échappement, les vibrations, le bruit, la rugosité, la durabilité mécanique de charge, la durabilité du système et/ou la durabilité de la batterie.

8. Système de commande (22) suivant la revendication 7 dans lequel la valeur de commande est dérivée sur la base d'un état de source d'alimentation instantané, ou dans lequel le système de commande (22) régule le fonctionnement du deuxième convertisseur d'énergie (14) lorsque la valeur de commande dépasse ladite limite d'avantage, ou dans lequel le système de commande (22) régule la recharge dudit dispositif d'accumulation d'énergie (18) lorsque la valeur de commande est inférieure à ladite limite de coût, ou dans lequel la limite d'avantage est fonction de la limite de coût.

9. Système de commande (22) suivant la revendication 7 ou 8 dans lequel la valeur de commande est comparée à une limite d'avantage ou de coût prédéterminée ou adaptative.

10. Système de commande (22) suivant la revendication 7 ou 8 dans lequel le système de commande (22) reçoit des données externes et/ou internes instantanées et la valeur de commande est comparée à une limite d'avantage ou de coût déterminée sur la base desdites données externes et/ou internes, et de préférence dans lequel la limite de coût est basée sur une charge de source d'alimentation future prédite dérivée desdites données externes et/ou internes.

11. Système de commande (22) suivant l'une quelconque des revendications 7 à 10 dans lequel ledit dispositif d'accumulation d'énergie (18) comprend au moins une batterie, un condensateur, un dispositif d'accumulation de chaleur et/ou un volant.

12. Procédé de gestion de la distribution d'énergie dans un système d'alimentation hybride incluant une première et une deuxième entrées d'énergie, un premier (20) et un deuxième (14) convertisseurs d'énergie respectifs, un dispositif d'accumulation d'énergie (18), un puits d'énergie et un dispositif de gestion de la distribution d'énergie dans lequel le fonctionnement du système d'alimentation présente un coût total associé qui est fonction de paramètres opérationnels du système d'alimentation, le procédé incluant les étapes d'évaluation d'un coût total et d'un avantage associés à un système de distribution d'énergie en fonction de paramètres opérationnels du système d'alimentation et de sélection d'un système de distribution d'énergie en utilisant un niveau de coût total optimal par comparaison dudit coût total et dudit avantage, respectivement, à une limite de coût et à une limite d'avantage ;
**caractérisé en ce que** ledit niveau de coût total optimal est obtenu en comparant le coût associé à la recharge dudit dispositif d'accumulation d'énergie (18) à une limite de coût et en comparant l'avantage, qui est fonction de paramètres opérationnels du système d'alimentation, associé au fonctionnement dudit deuxième convertisseur d'énergie (14) à une limite d'avantage, dans lequel ladite limite de coût et ladite limite d'avantage sont prédéterminées, ou dérivées instantanément.

13. Procédé suivant la revendication 12, ledit procédé comprenant les étapes de fonctionnement dudit deuxième convertisseur d'énergie (14) lorsque son fonctionnement permettra d'obtenir un avantage qui est égal ou supérieur à une limite d'avantage par comparaison avec au moins la consommation de carburant, l'émission d'échappement, les vibrations, le bruit, la rugosité et/ou la charge par ladite source d'alimentation hybride et de recharge dudit dispositif d'accumulation d'énergie (18) lorsque la recharge est atteinte jusqu'à la limite de coût par comparaison avec au moins la consommation de carburant, l'émission d'échappement, les vibrations, le bruit, la rugosité et/ou la charge.

14. Procédé suivant la revendication 13 comprenant l'étape de dérivation d'un niveau d'avantage associé au fonctionnement du deuxième convertisseur d'énergie (14) et de comparaison du niveau d'avantage à une limite d'avantage pour évaluer si un avantage net sera obtenu ou non, ou comprenant les étapes de dérivation d'un niveau de coût pour recharger ledit dispositif d'accumulation d'énergie (18) et de comparaison dudit niveau de coût à une limite de coût pour évaluer si le coût de recharge est acceptable ou non, ou dans lequel la limite d'avantage et/ou la limite de coût sont prédéterminées, ou dans lequel la limite de coût et/ou la limite d'avantage sont dérivées instantanément.

15. Procédé suivant la revendication 12 dans lequel la limite d'avantage est fonction de la limite de coût.

16. Support lisible par ordinateur sur lequel est mémorisé un programme pour mettre en oeuvre une gestion de la distribution d'énergie dans un système d'alimentation hybride suivant l'une quelconque des revendications 1 à 6, un système de commande (22) suivant l'une quelconque des revendications 7 à 11 ou un procédé suivant l'une quelconque des revendications 12 à 15.

17. Dispositif de traitement configuré pour exécuter des instructions pour mettre en oeuvre une gestion de la distribution d'énergie pour un système d'alimentation hybride suivant l'une quelconque des revendications 1 à 6, un système de commande (22) suivant l'une quelconque des revendications 7 à 11 ou un procédé suivant l'une quelconque des revendications 12 à 15.

18. Source d'alimentation hybride comprenant une première (20) et une deuxième (14) unités d'alimentation de types différents, au moins une (14) desdites unités étant rechargeable par ladite autre unité (20) et un système de commande (22) suivant l'une quelconque des revendications 7 à 11.

19. Véhicule (10) incluant une source d'alimentation hybride suivant la revendication 18.
